# EUROPEAN PATENT APPLICATION

(11) **EP 4 716 210 A1**
(43) Date of publication of application: **25.03.2026**
(21) Application number: 25203333.7
(22) Date of filing: 19.09.2025
(51) Int. Cl.: H04N 19/115, G06V 20/52, G08B 13/196, H04N 19/127, H04N 19/132, H04N 19/15, H04N 19/169, H04N 19/37, H04N 7/18

(54) **SYSTEMS AND METHODS FOR SMART VIDEO STORAGE UTILIZATION**

(30) Priority: 20.09.2024 US 202463697359 P; 20.09.2024 US 202463697357 P
(71) Applicant: Tyco Fire & Security GmbH, 8212 Neuhausen am Rheinfall (CH)
(72) Inventor: Monahan, David, Belfast, BT3 9ED (GB); Lawrence, Peter, Lisburn, BT28 2RS (GB); Italiya, Ashish, Belfast, BT3 9ED (GB); Bauerle, Jr., James Lee, Carmel, 46074 (US)
(74) Representative: Meissner Bolte Nürnberg

(57) **Abstract**

A building security system includes computer-readable storage media having instructions stored thereon that, when executed by processors, cause the processors to: receive, from cameras communicably coupled to the building security system, video data, wherein the video data includes one or more video recordings, retrieve contextual information associated with the video data, analyze, using one or more artificial intelligence models, the video data, wherein the analysis of the video data includes detecting one or more details, determine, using the one or more AI models, based on the contextual information and the one or more details detected within the video data, a relevance of the one or more video recordings, and, based on the relevance of the one or more video recordings, automatically implement, using the one or more AI models, an action to delete or reduce a storage size of at least one of the one or more video recordings.

## Description

This application claims the benefit of and priority to U.S. Provisional Application No. 63/697,357, filed September 20, 2024, and U.S. Provisional Application No. 63/697,359, filed September 20, 2024, which are incorporated herein by reference in their entirety and for all purposes.

The present invention relates generally to security systems for buildings. This application relates more particularly, according to some example embodiments, to systems and methods for building security that use artificial intelligence to dynamically manage video storage.

Embodiments according to the invention are disclosed in particular in the appended claims. In some aspects, the techniques described herein relate to a building security system including: one or more computer-readable storage media having instructions stored thereon that, when executed by one or more processors, cause the one or more processors to: receive, from one or more cameras communicably coupled to the building security system, video data, wherein the video data includes one or more video recordings; retrieve contextual information associated with the video data; analyze, using one or more artificial intelligence (AI) models, the video data, wherein the analysis of the video data includes detecting one or more details; determine, using the one or more AI models, based on the contextual information and on the one or more details detected within the video data, a relevance of the one or more video recordings; and based on the relevance of the one or more video recordings, automatically implement, using the one or more AI models, an action to delete or reduce a storage size of at least one of the one or more video recordings.

In some aspects, the techniques described herein relate to a building security system, wherein the action to delete or reduce the storage size of the at least one of the one or more video recordings includes updating a compression amount applied to the at least one of the one or more video recordings.

In some aspects, the techniques described herein relate to a building security system, wherein the one or more AI models determine a first relevance of a first video recording and a second relevance of a second video recording, wherein the first relevance is greater than the second relevance, and wherein a compression amount applied to the first video recording is smaller than a compression amount applied to the second video recording.

In some aspects, the techniques described herein relate to a building security system, wherein the second video recording occupies a smaller amount of storage space than the first video recording.

In some aspects, the techniques described herein relate to a building security system, wherein the action to delete or reduce the storage size of the at least one of the one or more video recordings includes deleting the at least one of the one or more video recordings.

In some aspects, the techniques described herein relate to a building security system, wherein the action to delete or reduce the storage size of the at least one of the one or more video recordings includes adjusting a bitrate applied to the at least one of the one or more video recordings.

In some aspects, the techniques described herein relate to a building security system, wherein the one or more AI models determine a first relevance of a first video recording and a second relevance of a second video recording, wherein the first relevance is greater than the second relevance, and wherein a bitrate applied to the first video recording is higher than a bitrate applied to the second video recording.

In some aspects, the techniques described herein relate to a building security system, wherein the second video recording occupies a smaller amount of storage space than the first video recording.

In some aspects, the techniques described herein relate to a building security system, wherein the contextual information associated with the video data includes an amount of remaining storage associated with the building security system for storage of the video data.

In some aspects, the techniques described herein relate to a building security system, wherein the instructions further cause the one or more processors to generate an alert based on the amount of remaining storage reaching a threshold amount.

In some aspects, the techniques described herein relate to a building security system, wherein the alert includes an option to implement the action to delete or reduce the storage size of the at least one of the one or more video recordings.

In some aspects, the techniques described herein relate to a building security system, wherein at least one of the one or more AI models is trained using domain-specific data, wherein the domain-specific data relates to a domain in which the building security system is being implemented.

In some aspects, the techniques described herein relate to a method including: receiving, by one or more processors, from one or more cameras communicably coupled to a building security system, video data, wherein the video data includes one or more video recordings; retrieving, by the one or more processors, contextual information associated with the video data; analyzing, by the one or more processors, using one or more artificial intelligence (AI) models, the video data, wherein the analysis of the video data includes detecting one or more details; determining, by the one or more processors, using the one or more AI models, based on the contextual information and on the one or more details detected within the video data, a relevance of the one or more video recordings; and based on the relevance of the one or more video recordings, automatically implementing, by the one or more processors, using the one or more AI models, an action to delete or reduce a storage size of at least one of the one or more video recordings.

In some aspects, the techniques described herein relate to a method, wherein the action to delete or reduce the storage size of the at least one of the one or more video recordings includes updating a compression amount applied to the at least one of the one or more video recordings.

In some aspects, the techniques described herein relate to a method, wherein the one or more AI models determine a first relevance of a first video recording and a second relevance of a second video recording, wherein the first relevance is greater than the second relevance, wherein a compression amount applied to the first video recording is smaller than a compression amount applied to the second video recording, and wherein the second video recording occupies a smaller amount of storage space than the first video recording.

In some aspects, the techniques described herein relate to a method, wherein the action to delete or reduce the storage size of the at least one of the one or more video recordings includes deleting the at least one of the one or more video recordings.

In some aspects, the techniques described herein relate to a method, wherein: the action to delete or reduce the storage size of the at least one of the one or more video recordings includes adjusting a bitrate applied to the at least one of the one or more video recordings, the one or more AI models determine a first relevance of a first video recording and a second relevance of a second video recording, the first relevance is greater than the second relevance, a bitrate applied to the first video recording is higher than a bitrate applied to the second video recording, and the second video recording occupies a smaller amount of storage space than the first video recording.

In some aspects, the techniques described herein relate to a method, wherein the contextual information associated with the video data includes an amount of remaining storage associated with the building security system for storage of the video data, wherein the method further includes: generating, by the one or more processors, an alert based on the amount of remaining storage reaching a threshold amount, wherein the alert includes an option to implement the action to delete or reduce the storage size of the at least one of the one or more video recordings.

In some aspects, the techniques described herein relate to a method, wherein at least one of the one or more AI models is trained using domain-specific data, wherein the domain-specific data relates to a domain in which the building security system is being implemented.

In some aspects, the techniques described herein relate to one or more non-transitory computer-readable media storing instructions thereon that, when executed by one or more processors, cause the one or more processors to perform operations including: receiving, from one or more cameras communicably coupled to a building security system, video data, wherein the video data includes one or more video recordings; retrieving contextual information associated with the video data; analyzing, using one or more artificial intelligence (AI) models, the video data, wherein the analysis of the video data includes detecting one or more details; determining, using the one or more AI models, based on the contextual information and on the one or more details detected within the video data, a relevance of the one or more video recordings; and based on the relevance of the one or more video recordings, automatically implementing, using the one or more AI models, an action to delete or reduce a storage size of at least one of the one or more video recordings.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1 is a perspective view schematic drawing of a building with a security system, according to some embodiments.
FIG. 2 is a block diagram of building security systems for multiple buildings communicating with a cloud-based security system, according to some embodiments.
FIG. 3 is a block diagram illustrating several components of an access control system (ACS) that can be implemented in the building security systems of FIG. 2, according to some embodiments.
FIG. 4 is a block diagram of a security system including a machine learning model trained to recognize objects and events in video data, according to some embodiments.
FIG. 5 illustrates a flowchart for using the system of FIG. 4 to dynamically update video compression, according to some embodiments.
FIG. 6 illustrates a flowchart for using the system of FIG. 4 to dynamically manage video storage, according to some embodiments.

### DETAILED DESCRIPTION

### Overview

Referring generally to the FIGURES, a building security system with video analysis is shown, according to an exemplary embodiment. The security system may be used in a building, facility, campus, or other physical location to analyze video data received from cameras or other input devices. The security system may use an artificial intelligence (AI) model (e.g., a foundation AI model, a generative AI model, etc.) to recognize particular objects, events, or other entities in video data and may add supplemental annotations to a video stream denoting the recognized objects or events. For example, the artificial intelligence model may be trained to identify contextual information and/or abnormalities within the video data, as described in greater detail below. In some embodiments, in response to detecting an object or event, the security system may adjust a compression setting associated with the video data such that video data with objects and/or events of interest are stored with a low compression rate, and video data lacking any objects and/or events of interest are stored with a high compression rate. Additionally, according to some embodiments, the security system may be configured to manage an amount of storage occupied by the video data such that the video data lacking any objects and/or events of interest occupy a minimal amount of available storage space (e.g., by deleting such video data, applying a high compression rate to the video data, applying a low bitrate to the video data, etc.).

Existing video analysis systems lack dynamic storage optimization solutions. That is, video data consumes a large amount of storage capacity in these systems, especially video data from security cameras configured to capture an ongoing stream of video footage. There is an existing trade-off between capturing higher-quality video footage and occupying minimal storage space. In other words, capturing highly compressed video footage such that it occupies less storage capacity comes at the cost of losing clear depictions of details of objects/events of interest in the video footage. Much of the video footage, however, captures scenarios where a building is unoccupied (e.g., at night, outside of business hours, etc.), and there are no objects or persons to be seen in the video data. As such, much of the video footage is rarely, if ever, utilized. Furthermore, large portions of video data depict normal activity, rather than objects/events of interest, and are thus less relevant to security operations in a building.

Existing systems, however, fail to consider the relevancies of video footage when managing storage capacity. The existing systems implement a first-in, first-out approach to optimizing video storage capacity, meaning older video data is deleted prior to newer video data, unless portions of video footage are manually flagged with an instruction to keep the portions of video footage. With this method, older video data that may contain objects or persons to be seen are deleted prior to newer video data that may contain no objects or persons to be seen (e.g., at night, outside of business hours, etc.). Additionally, analyzing video footage after it is collected to identify relevant portions of the footage to keep is a time-intensive process, and can require significant resources (e.g., human resources, processing capacity, network bandwidth, etc.). Further, managing video storage capacity is often performed under tight time constraints when a total amount of storage capacity in the video analysis system is already running out.

The present solution can improve upon existing video analysis systems by offering a dynamic solution configured to manage video storage in real-time. That is, the present solution offers a technical improvement over existing systems by managing video storage (e.g., adjusting compression rates, video deletion, adjusting bitrates, etc.) as video footage is captured by a camera. For example, systems and methods in accordance with the present disclosure can automatically delete less relevant video footage (e.g., with no objects and/or events of interest) in real-time as storage conditions, network conditions, etc., change. In this way, older video data with objects and/or events of interest may be kept, while newer video data with no objects and/or events of interest may be deleted in order to preserve the amount of storage space for the video footage including the objects and/or events of interest.

### Building Security System

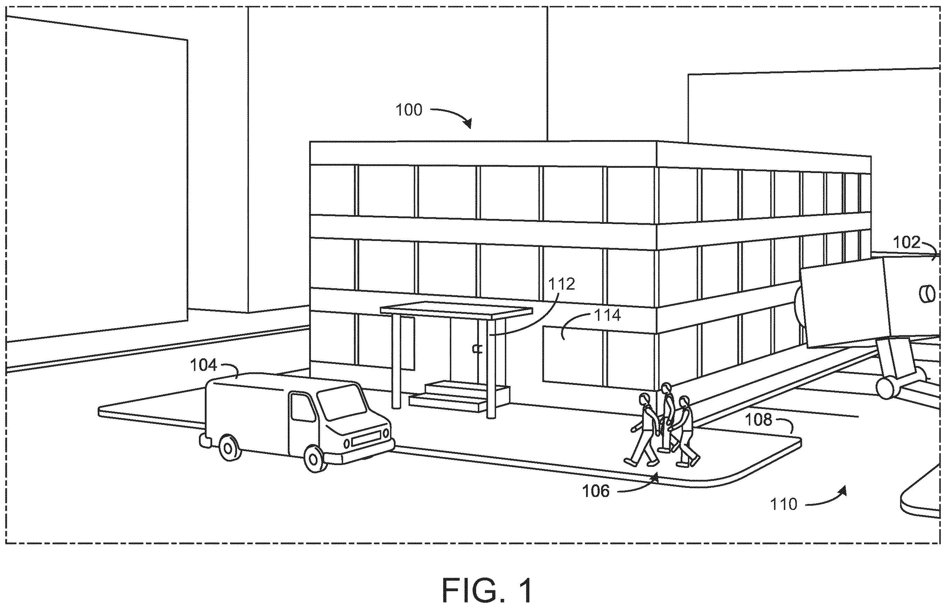

Referring now to FIG. 1, a building 100 with a security camera 102 and a parking lot 110 is shown, according to an exemplary embodiment. The building 100 is a multi-story commercial building surrounded by, or near, the parking lot 110 but can be any type of building in some embodiments. The building 100 may be a school, a hospital, a store, a place of business, a residence, a hotel, an office building, an apartment complex, etc. The building 100 can be associated with the parking lot 110.

Both the building 100 and the parking lot 110 are at least partially in the field of view of the security camera 102. In some embodiments, multiple security cameras 102 may be used to capture the entire building 100 and parking lot 110 not in (or in to create multiple angles of overlapping or the same field of view) the field of view of a single security camera 102. The parking lot 110 can be used by one or more vehicles 104 where the vehicles 104 can be either stationary or moving (e.g., busses, cars, trucks, delivery vehicles). The building 100 and parking lot 110 can be further used by one or more pedestrians 106 who can traverse the parking lot 110 and/or enter and/or exit the building 100. The building 100 may be further surrounded, or partially surrounded, by a sidewalk 108 to facilitate the foot traffic of one or more pedestrians 106, facilitate deliveries, etc. In other embodiments, the building 100 may be one of many buildings belonging to a single industrial park, shopping mall, airport, or commercial park having a common parking lot and security camera 102. In another embodiment, the building 100 may be a residential building or multiple residential buildings that share a common roadway or parking lot.

The building 100 is shown to include a door 112 and multiple windows 114. An access control system (ACS) can be implemented within the building 100 to secure these potential entrance ways of the building 100. For example, badge readers can be positioned outside the door 112 to restrict access to the building 100. The pedestrians 106 can each be associated with access badges that they can utilize with the ACS to gain access to the building 100 through the door 112. Furthermore, other interior doors within the building 100 can include access readers. In some embodiments, the doors are secured through biometric information, e.g., facial recognition, fingerprint scanners, etc. The ACS can generate events, e.g., an indication that a particular user or a particular badge has interacted with the door. Furthermore, if the door 112 is forced open, the ACS, via a door sensor, can detect the door forced open (DFO) event.

The windows 114 can be secured by the ACS via burglar alarm sensors. These sensors can be configured to measure vibrations associated with the window 114. If vibration patterns or levels of vibrations are sensed by the sensors of the window 114, a burglar alarm can be generated by the ACS for the window 114.

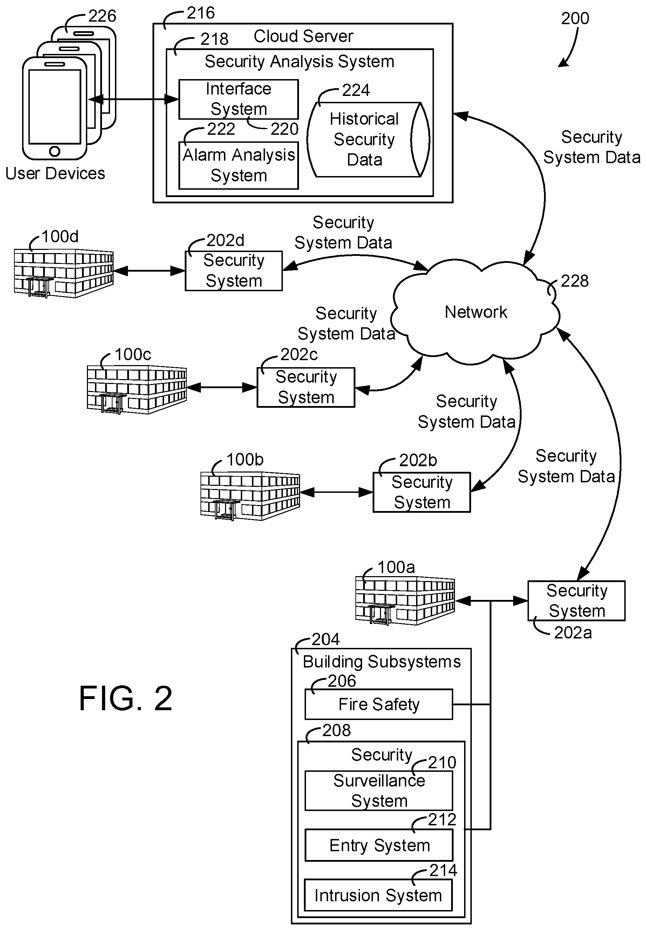

Referring now to FIG. 2, a security system 200 is shown for multiple buildings, according to an exemplary embodiment. The security system 200 is shown to include buildings 100a, 100b, 100c, and 100d. The security system 200 may be, therefore, a building security system. Each of the buildings 100a-100d is shown to be associated with a security system 202a, 202b, 202c, and 202d. The buildings 100a-100d may be the same as and/or similar to building 100 as described with reference to FIG. 1. The security systems 202a-202d may be one or more controllers, servers, and/or computers located in a security panel or part of a central computing system for a building.

The security systems 202a-202d may communicate with, or include, various security sensors and/or actuators, building subsystems 204. For example, fire safety subsystems 206 may include various smoke sensors and alarm devices, carbon monoxide sensors, alarm devices, etc. Security subsystems 208 are shown to include a surveillance system 210, an entry system 212, and an intrusion system 214. The surveillance system 210 may include various video cameras, still image cameras, and image and/or video processing systems for monitoring various rooms, hallways, parking lots, the exterior of a building, the roof of the building, etc. The entry system 212 can include one or more systems configured to allow users to enter and exit the building (e.g., door sensors, turnstiles, gated entries, badge systems, etc.). The intrusion system 214 may include one or more sensors configured to identify whether a window or door has been forced open. The intrusion system 214 can include a keypad module for arming and/or disarming a security system and various motion sensors (e.g., IR, PIR, etc.) configured to detect motion in various zones of the building 100a.

Each of buildings 100a-100d may be located in various cities, states, and/or countries across the world. There may be any number of buildings 100a-100d. The buildings 100a-100d may be owned and operated by one or more entities. For example, a grocery store entity may own and operate buildings 100a-100d in a particular geographic state. The security systems 202a-202d may record data from the building subsystems 204 and communicate collected security system data to the cloud server 216 via network 228.

In some embodiments, the network 228 communicatively couples the devices, systems, and servers of the system 200. In some embodiments, the network 228 is at least one of and/or a combination of a Wi-Fi network, a wired Ethernet network, a ZigBee network, a Bluetooth network, and/or any other wireless network. The network 228 may be a local area network and/or a wide area network (e.g., the Internet, a building WAN, etc.) and may use a variety of communications protocols (e.g., BACnet, IP, LON, etc.). The network 228 may include routers, modems, and/or network switches. The network 228 may be a combination of wired and wireless networks.

The cloud server 216 is shown to include a security analysis system 218 that receives the security system data from the security systems 202a-202d of the buildings 100a-100d. The cloud server 216 may include one or more processing circuits (e.g., memory devices, processors, databases) configured to perform the various functionalities described herein. The cloud server 216 may be a private server. In some embodiments, the cloud server 216 is implemented by a cloud system.

A processing circuit of the cloud server 216 can include one or more processors and memory devices. The processor can be a general purpose or specific purpose processor, an application specific integrated circuit (ASIC), one or more field programmable gate arrays (FPGAs), a group of processing components, or other suitable processing components. The processor may be configured to execute computer code and/or instructions stored in a memory or received from other computer readable media (e.g., CDROM, network storage, a remote server, etc.).

The memory can include one or more devices (e.g., memory units, memory devices, storage devices, etc.) for storing data and/or computer code for completing and/or facilitating the various processes described in the present disclosure. The memory can include random access memory (RAM), read-only memory (ROM), hard drive storage, temporary storage, non-volatile memory, flash memory, optical memory, or any other suitable memory for storing software objects and/or computer instructions. The memory can include database components, object code components, script components, or any other type of information structure for supporting the various activities and information structures described in the present disclosure. The memory can be communicably connected to the processor via the processing circuit and can include computer code for executing (e.g., by the processor) one or more processes described herein.

In some embodiments, the cloud server 216 can be located on premises within one of the buildings 100a-100d. For example, a user may wish that their security, fire, or HVAC data remain confidential and have a lower risk of being compromised. In such an instance, the cloud server 216 may be located on-premises instead of within an off-premises cloud platform.

The security analysis system 218 may implement an interface system 220, an alarm analysis system 222, and a database storing historical security data 224 (e.g., security system data collected from the security systems 202a-202d). The interface system 220 may provide various interfaces of user devices 226 for monitoring and/or controlling the security systems 202a-202d of the buildings 100a-100d. The interfaces may include various maps, alarm information, maintenance ordering systems, etc. The historical security data 224 can be aggregated security alarm and/or event data collected via the network 228 from the buildings 100a-100d. The alarm analysis system 222 can be configured to analyze the aggregated data to identify insights, detect alarms, reduce false alarms, etc. The analysis results of the alarm analysis system 222 can be provided to a user via the interface system 220. In some embodiments, the results of the analysis performed by the alarm analysis system 222 are provided as control actions to the security systems 202a-202d via the network 228.

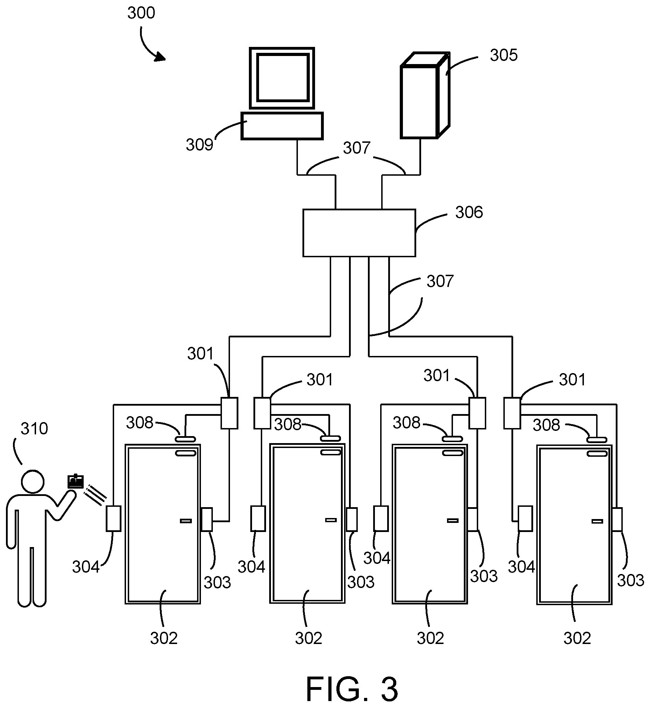

Referring now to FIG. 3, a block diagram of an ACS 300 is shown, according to an exemplary embodiment. The ACS 300 can be implemented in any of the buildings 100a-100d as described with reference to FIG. 2. The ACS 300 is shown to include a plurality of doors 302. Each of the doors 302 is associated with a door lock 303, an access reader module 304, and one or more door sensors 308. The door locks 303, the access reader modules 304, and the door sensors 308 may be connected to access controllers 301. The access controllers 301 may be connected to a network switch 306 that directs signals, according to the configuration of the ACS 300, through network connections 307 (e.g., physical wires or wireless communications links) interconnecting the access controllers 301 to an ACS server 305 (e.g., the cloud server 216). The ACS server 305 may be connected to an end-user terminal or interface 309 through network switch 306 and the network connections 307.

The ACS 300 can be configured to grant or deny access to a controlled or secured area. For example, a person 310 may approach the access reader module 304 and present credentials, such as an access card. The access reader module 304 may read the access card to identify a card ID or user ID associated with the access card. The card ID or user ID may be sent from the access reader module 304 to the access controller 301, which determines whether to unlock the door lock 303 or open the door 302 based upon whether the person 310 associated with the card ID or user ID has permission to access the controlled or secured area.

### Video Analysis System

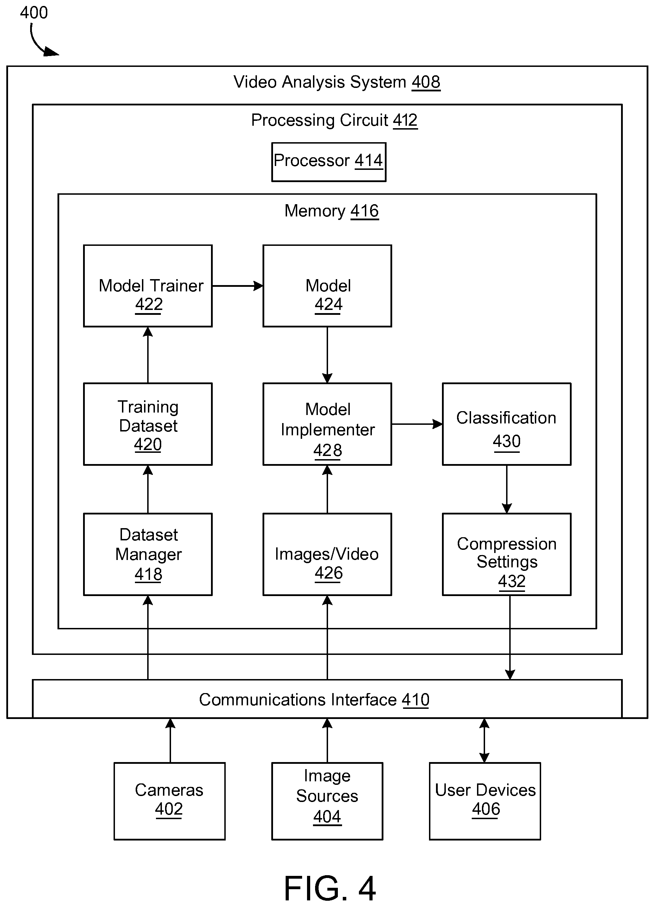

Referring now to FIG. 4, a block diagram of a security system 400 is shown, according to an exemplary embodiment. The security system 400 can be or include one or more of the security systems 202a-202d and/or the security analysis system 218 shown in FIG. 2. For example, the security system 400 may be a building security system. The security system 400 is shown to include cameras 402, image sources 404, user devices 406, and a video analysis system 408. The cameras 402 may include video cameras, surveillance cameras, perimeter cameras, still image cameras, motion activated cameras, infrared cameras, or any other type of camera that can be used in a security system. The cameras 402 may be communicably coupled to the building security system. The image sources 404 can be cameras or other types of image sources such as a computing system, database, and/or server system. In some embodiments, the user devices 406 may include the user devices 226 shown in FIG. 2. The cameras 402, the image sources 404, and/or the user devices 406 can be configured to provide video clips, a video feed, images, or other types of visual data to the video analysis system 408.

The video analysis system 408 can be configured to receive and store images/video 426 received from the cameras 402, the image sources 404, and/or the user devices 406 and process the stored images/video 426 for training and executing one or more artificial intelligence (AI) models (e.g., model 424). The video analysis system 408 can be configured to receive video data. For example, one or more processors may receive, from one or more cameras communicably coupled to the building security system, video data, where the video data includes one or more video recordings. The one or more processors may also retrieve contextual information associated with the video data. In some embodiments, the contextual information associated with the video data may include an amount of remaining storage associated with the building security system for storage of the video data.

For instance, the one or more AI models may be configured to perform an analysis of the images/video 426 received from the cameras 402, the image sources 404, and/or the user devices 406 and may be further configured to determine an amount of compression to apply to the images/video 426 based upon the analysis. The video analysis system 408 can be implemented as part of a security system of the building 100 as described with reference to FIG. 1, as part of the vehicle 104 as described with reference to FIG. 1, etc. In some embodiments, the video analysis system 408 can be configured to be implemented by a cloud computing system. The cloud computing system can include one or more controllers, servers, and/or any other computing devices that can be located remotely and/or connected to the systems of building 100 via networks (e.g., the Internet). The cloud computing system can include any of the components or features of the cloud server 216 shown in FIG. 2.

The video analysis system 408 is shown to include a communications interface 410 and a processing circuit 412. The communications interface 410 may include wired or wireless interfaces (e.g., jacks, antennas, transmitters, receivers, transceivers, wire terminals, etc.) for conducting data communications with various systems, devices, or networks. For example, the communications interface 410 may include an Ethernet card and port for sending and receiving data via an Ethernet-based communications network and/or a Wi-Fi transceiver for communicating via a wireless communications network. The communications interface 410 may be configured to communicate via local area networks or wide area networks (e.g., the Internet, a building WAN, etc.) and may use a variety of communications protocols (e.g., BACnet, IP, LON, etc.).

The processing circuit 412 is shown to include a processor 414 and a memory 416. The processor 414 can be implemented as a general-purpose processor, an ARM processor, an application specific integrated circuit (ASIC), one or more field programmable gate arrays (FPGAs), a group of processing components, or other suitable electronic processing components. The memory 416 (e.g., memory, memory unit, storage device, etc.) may include one or more devices (e.g., RAM, ROM, Flash memory, hard disk storage, etc.) for storing data and/or computer code for completing or facilitating the various processes, layers and modules described in the present application. The memory 416 can be or include volatile memory and/or non-volatile memory. The memory 416 can include object code components, script components, or any other type of information structure for supporting the various activities and information structures described in the present application. The memory 416 may be or include one or more computer-readable storage media having instructions stored thereon. In some embodiments, the memory 416 may be or include one or more non-transitory computer-readable storage media storing instructions thereon. According to some embodiments, the memory 416 is communicably connected to the processor 414 via the processing circuit 412 and can include computer code for executing (e.g., by the processing circuit 412 and/or the processor 414) one or more processes of functionality described herein. For example, the instructions stored in or on the memory 416 may be executed by one or more processors and cause the one or more processors to perform one or more operations described herein.

The video analysis system 408 is shown to include a dataset manager 418 configured to identify images, objects, or other items in the group of images/video 426 provided by the cameras 402, image sources 404, and/or user devices 406 into distinct categories based upon subject matter. In some embodiments, the dataset manager 418 is configured to label all images/video 426 provided by the cameras 402, image sources 404, and/or user devices 406 and/or categorize the images/video 426 based upon the labels included with the images/video 426. The dataset manager 418 can be configured to generate a training dataset 420 using all or a portion of the images/video 426 from the cameras 402, image sources 404, and/or user devices 406. For example, in some embodiments, the portion of the images/video 426 to be included in the training dataset 420 may depend on a domain in which the video analysis system 408 is being implemented (e.g., a shopping mall, a corporate center, an airport, etc.).

The training dataset 420 can be configured to contain images separated into object of interest annotations and foreign object annotations. For example, the images may be separated into the object of interest annotations and the foreign object annotations according to a specific enterprise within which the video analysis system 408 is being implemented (e.g., in a shopping mall, in an airport, in a corporate center, etc.). Each object of the interest annotations can be configured as a finite group of known images or videos of objects that the video analysis system 408 may be configured to identify. In the enterprise-specific example, the finite group of known images or videos of objects may include images or videos that capture objects known to the enterprise.

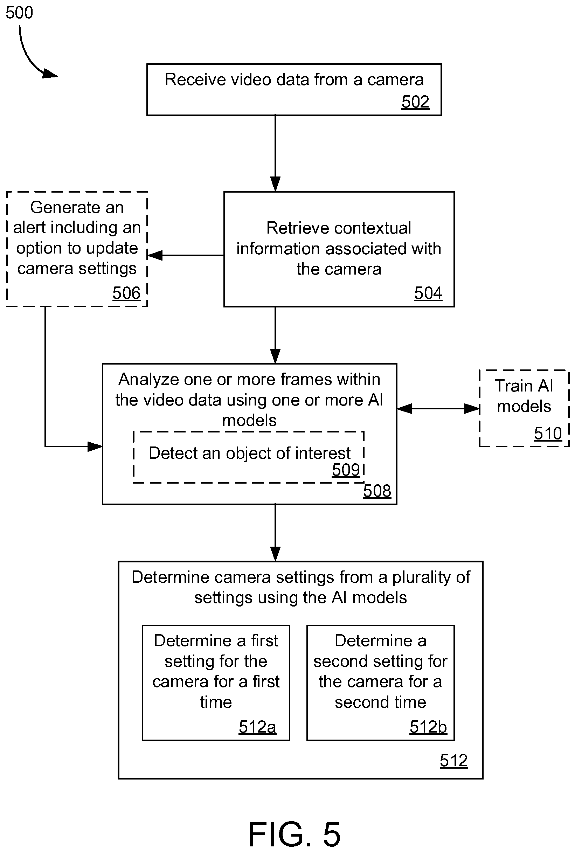

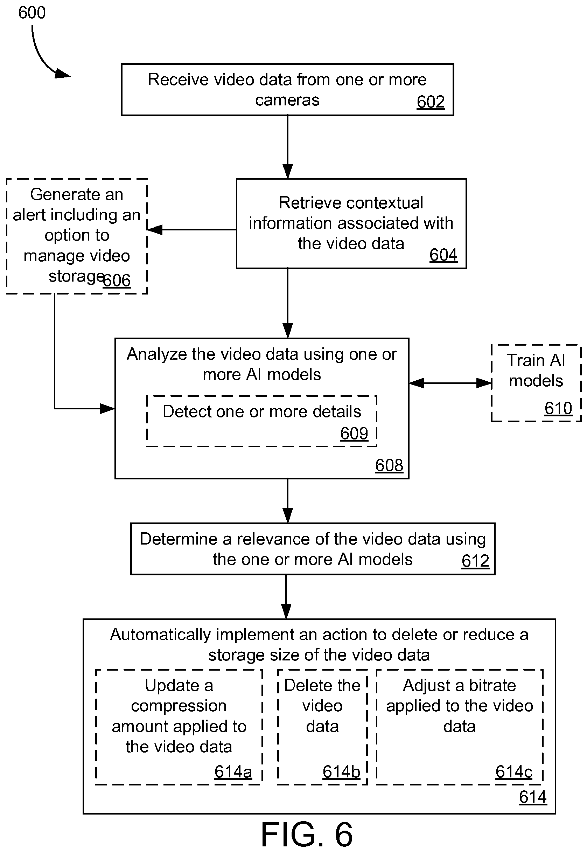

The object of interest annotations may include one or more images or videos derived from one or more cameras 402, image sources 404, and/or user devices 406. In some embodiments, the object of interest annotations further include a group of images/videos representing a variety of objects, shapes, features, and edges that form one or more objects of interest that the video analysis system 408 can be configured to recognize. As described below with reference to FIG. 5, the object of interest annotations may be used to determine a compression amount to apply to the images/videos 426. Further, as described with reference to FIG. 6, the object of interest annotations may be used to manage storage of the images/videos 426. The one or more foreign object annotations can be a finite group of images/videos of objects which may partially occlude an image of the object of interest image annotations when analyzed by the video analysis system 408. In some embodiments, the one or more foreign object annotations are configured as a group of images/videos representing a variety of objects, shapes, features, and edges that form a foreign object or a group of foreign objects which may partially occlude one or more objects of interest contained within the object of interest annotations. As described below with reference to FIG. 5, the foreign object annotations may also be used to determine a compression amount to apply to the images/videos 426. Further, as described with reference to FIG. 6, the foreign object annotations may be used to manage storage of the images/videos 426.

The training dataset 420 is then provided as input to a model trainer 422 which is used to train the model 424 of the video analysis system 408 to identify an object of interest or multiple objects of interest based upon the images/videos of the object of interest annotation. For example, the one or more processors may analyze, using one or more artificial intelligence (AI) models, the video data, where the analysis of the video data includes detecting one or more details. The model trainer 422 can also be configured to train the model 424 of the video analysis system 408 to remove foreign objects that might partially occlude an object of interest based upon the images/videos of the foreign object annotation. Generally, the model trainer 422 will produce a more accurate image/video annotation model 424 if the training dataset 420 includes many images with both the objects of interest annotations and the foreign object annotations. In some embodiments, the training dataset 420 is also provided as input to a model trainer 422 which is used to train the model 424 of the video analysis system 408 to determine compression settings 432 to apply to the videos based on the objects of interest. Additionally, the training dataset 420 may be provided as input to a model trainer 422 which is used to train a model 424 of the video analysis system 408 to implement an action to delete or reduce a storage size of the images/video 426 based on the objects of interest.

According to certain implementations, the model 424 configured to identify the object of interest or multiple objects of interest may be the same model 424 as the model 424 configured to determine the compression settings 432 to apply to the videos. In such implementations, the video analysis system 408 may include a single model trainer 422. Alternatively or additionally, the model 424 configured to identify the object of interest or multiple objects of interest may be a different model 424 from the model 424 configured to determine the compression settings 432 to apply to the videos. Further, in some embodiments, the model 424 configured to identify the object of interest or multiple objects of interest and/or the model 424 configured to determine the compression settings 432 may be a different model 424 from the model 424 configured to implement an action to delete or reduce a storage size of the images/video 426. In such implementations, the video analysis system 408 may include multiple model trainers 422 for each of the different models 424.

The images (e.g., one or more frames from the video data) of objects with the foreign annotations and the images (e.g., one or more frames from the video data) of objects of interest that are divided into the object of interest annotations and the foreign object annotations can be images of different objects such that for a particular object, that particular object only occurs in one of the sets. In this regard, the dataset manager 418 can be configured to cause the images of objects to be split up such that no images of the same object are in both sets. Examples of images of objects of interest and/or images of foreign objects include images of snow, rain, dust, dirt, windows, glass, cars, people, animals, a parking lot, a sidewalk, a building, a sign, a shelf, a door, a chair, a bicycle, a cup, a parking lot with snow, a parking lot with no snow, a parking space with snow, a parking space with no snow, a parking space with a car, a parking space with no car, and/or any other object.

In some embodiments, the model trainer 422 can train the one or more models 424 included in the video analysis system 408 to recognize various objects, actions, or other elements of interest in the images/video 426. For example, one or more AI models may be used to analyze the video data, where the analysis of the video data includes detecting one or more details. Examples of actions include a person walking, a person running, a vehicle moving, a door opening or closing, a person digging, a person breaking a lock, fence, or other barrier, or any other action which may be relevant for the purposes of monitoring and responding to the images/videos 426 provided by the cameras 402, image sources 404, and/or user devices 406. Recognizing actions can be based upon still images from the cameras 402 and image sources 404 and/or videos provided by video cameras or other data sources. For example, the model trainer 422 can receive a timeseries or set of video frames as an input and can recognize an action based upon multiple video frames (e.g., a time segment or period of video data).

The one or more processors may determine, using the one or more AI models, based on the contextual information and on the one or more details detected within the video data, a relevance of the one or more video recordings. Based on the relevance of the one or more video recordings, the one or more processors may automatically implement, using the one or more AI models, an action to delete or reduce a storage size of at least one of the one or more video recordings. Although cameras 402 and image sources 404 are described as the primary type of data sources used by the security system 400, it is contemplated that the same or similar analysis can be applied to other types of input data such as audio inputs from microphones, readings from motion sensors, door open/close data, or any other type of data received as input in a security system.

The model trainer 422 can be configured to train the model 424 using one or more training methodologies including gradient descent, back-propagation, transfer learning, max pooling, batch normalization, etc. For example, in some embodiments, the model trainer 422 is configured to train the model 424 from scratch, i.e., where the model 424 has no prior training from some prior training data. In other embodiments, the model trainer 422 is configured to train the model 424 using a transfer learning process, wherein the model 424 has previously been trained to accomplish a different set of tasks and is repurposed to identify and remove objects, features, shapes, and edges contained in the training dataset 420. In some embodiments, the model trainer 422 can be configured to train the model 424 using a feature extraction methodology.

The model 424 can be any type of model 424 suitable for recognizing objects, actions, or other entities in images or video. In some embodiments, the model 424 can include one or more neural networks, including neural networks configured as generative models (e.g., generative AI models). For example, the model 424 can predict or generate new data (e.g., artificial data; synthetic data; data not explicitly represented in data used for configuring the model 424). The model 424 can generate any of a variety of modalities of data, such as text, speech, audio, images, and/or video data. The neural network can include a plurality of nodes, which may be arranged in layers for providing outputs of one or more nodes of one layer as inputs to one or more nodes of another layer. The neural network can include one or more input layers, one or more hidden layers, and one or more output layers. Each node can include or be associated with parameters such as weights, biases, and/or thresholds, representing how the node can perform computations to process inputs to generate outputs. The parameters of the nodes can be configured by various learning or training operations, such as unsupervised learning, weakly supervised learning, semi-supervised learning, or supervised learning.

The model 424 can include, for example and without limitation, one or more language models, LLMs, attention-based neural networks, transformer-based neural networks, generative pretrained transformer (GPT) models, bidirectional encoder representations from transformers (BERT) models, encoder/decoder models, sequence to sequence models, autoencoder models, generative adversarial networks (GANs), convolutional neural networks (CNNs), recurrent neural networks (RNNs), diffusion models (e.g., denoising diffusion probabilistic models (DDPMs)), or various combinations thereof.

The model 424 can include at least one diffusion model, which can be used to generate image and/or video data. For example, the diffusional model can include a denoising neural network and/or a denoising diffusion probabilistic model neural network. The denoising neural network can be configured by applying noise to one or more training data elements (e.g., images, video frames) to generate noised data, providing the noised data as input to a candidate denoising neural network, causing the candidate denoising neural network to modify the noised data according to a denoising schedule, evaluating a convergence condition based on comparing the modified noised data with the training data instances, and modifying the candidate denoising neural network according to the convergence condition (e.g., modifying weights and/or biases of one or more layers of the neural network).

In some implementations, the model 424 can be configured using various unsupervised and/or supervised training operations. The model 424 can be configured using training data from various domain-agnostic and/or domain-specific data sources, including but not limited to various forms of text, speech, audio, image, and/or video data, or various combinations thereof. The training data can include a plurality of training data elements (e.g., training data instances). Each training data element can be arranged in structured or unstructured formats; for example, the training data element can include an example output mapped to an example input, such as a video clip depicting an object of interest within a building or one or more images from a video clip, and an amount of compression applied to the video clip responsive to the object of interest depicted in the video/image data. The training data can include data that is not separated into input and output subsets (e.g., for configuring the model 424 to perform clustering, classification, or other unsupervised ML operations). The training data can include human-labeled information, including but not limited to feedback regarding outputs of the model 424.

In some embodiments, the model 424 may include a task-specific AI model and/or a general AI model which can be used in multiple domains. For example, at least one of the one or more AI models is trained using domain-specific data, where the domain-specific data relates to a domain in which the building security system is being implemented. Non-limiting examples of AI models which could be used include GPT, BERT, DALL-E, and CLIP. Other examples include a CLIP4Clip model configured to perform video-text retrieval based on CLIP, an image-text model trained on image-text caption data (e.g., from an internet source), a video-text model trained on video-text caption data, or any other types of models configured to translate between text, images, videos, and other forms of input data.

In some embodiments, the model 424 is a convolutional neural network including convolutional layers, pooling layers, and output layers. Furthermore, the model 424 can include an activation subtractor. The activation subtractor can be configured to improve the accuracy of the model 424 in instances where a foreign object partially occludes an object of interest. The activation subtractor improves the accuracy of the model 424 by deactivating the activations of neurons associated with some foreign object and modifying the activations of neurons associated with objects of interest by subtracting the activation levels of all foreign objects from the activation levels of the objects of interest.

In some embodiments, the cameras 402 and/or the image sources 404 could be a security camera 102 (as shown in FIG. 1) overlooking a parking lot and building 100 (as shown in FIG. 1). The cameras 402 and/or the image sources 404 can also be configured to provide an image/video 426 to the model implementer 428. The model implementer 428 can cause the image/video annotation model 424 including activation subtractor to operate using the image/video 426 as input. The model 424 and activation subtractor can be configured to deactivate the activation levels of the neuron activations caused by foreign object annotations. The model 424 will operate and produce output in the form of an image/video annotation whereby the image/video 426 is annotated by assigning a probability to image/video annotation.

Based on the object of interest annotations, the model 424 may be trained to classify the images/video 426 as images/video 426 including an object of interest or images/video 426 not including an object of interest. For example, the one or more processors may analyze, using one or more artificial intelligence (AI) models, the video data, where the analysis of the video data comprises detecting one or more details. The processors may determine, using the one or more AI models, based on the contextual information and on the one or more details detected within the video data, a relevance of the one or more video recordings. The model 424 may store the images/video 426 with the corresponding classifications 430. That is, the model 424 may store the images/video 426 such that the images/video 426 occupy a minimal amount of available storage space based on the classifications 430 (e.g., whether the images/video 426 include an object of interest or not). For example, in some embodiments, based on the relevance of the one or more video recordings, the one or more processors may automatically implement, using the one or more AI models, an action to delete or reduce a storage size of at least one of the one or more video recordings. In various embodiments, the action to delete or reduce the storage size of the at least one of the one or more video recordings may include updating a compression amount applied to the at least one of the one or more video recordings.

For instance, as described in greater detail with reference to FIG. 6, images/video 426 including an object of interest may occupy more storage space than images/video 426 not including an object of interest. The images/video 426 not including an object of interest may be deleted, may receive a greater compression amount, may receive a lower bitrate, and so on. For example, the action to delete or reduce the storage size of the at least one of the one or more video recordings may include deleting the at least one of the one or more video recordings. As another example, the action to delete or reduce the storage size of the at least one of the one or more video recordings may include adjusting a bitrate applied to the at least one of the one or more video recordings. As still another example, in some embodiments, the images/video 426 may be stored such that compression settings 432 associated with one or more frames in the images/video 426 may be updated based upon the classifications 430. That is, as described below with reference to FIG. 5, for images/video 426 with an object of interest classifications 430, the amount of compression applied to the video data may be lower than the amount of compression applied to the video data classified as not including an object of interest. As such, the one or more AI models may determine a first relevance of a first video recording and a second relevance of a second video recording, where the first relevance is greater than the second relevance, and where a compression amount applied to the first video recording is smaller than a compression amount applied to the second video recording. The second video recording may occupy a smaller amount of storage space than the first video recording.

As another example, the one or more AI models determine a first relevance of a first video recording and a second relevance of a second video recording, where the first relevance is greater than the second relevance, and where a bitrate applied to the first video recording is higher than a bitrate applied to the second video recording. The second video recording may occupy a smaller amount of storage space than the first video recording.

In some embodiments, the instructions (e.g., stored in the memory 416) further cause the one or more processors (e.g., processor 414) to generate an alert based on the amount of remaining storage reaching a threshold amount. The alert may include an option to implement the action to delete or reduce the storage size of the at least one of the one or more video recordings.

In some embodiments, as described herein, the model 424 used to identify the objects of interest may be the same model 424 used to determine the amount of compression to apply to the video data. Alternatively, according to some other embodiments, the model 424 used to identify the objects of interest may be different from the model 424 used to determine the amount of compression to apply to the video data.

### Video Compression

Referring now to FIG. 5, a flowchart of a process 500 for updating video compression settings (e.g., compression settings 432) for camera footage in a building security system is shown, according to an exemplary embodiment. In some embodiments, the process 500 may be performed by the video analysis system 408 of FIG. 4. The models used in process 500 are machine learning models, and at least one of the models may be the same as or similar to the model 424 shown in FIG. 4. In some embodiments, the process 500 may be used to manage video storage associated with the building security system, as described in greater detail below with reference to FIG. 6.

Process 500 is shown to include receiving video data from a camera (step 502). In some embodiments, the camera may be camera 102 of the building security system depicted in FIG. 1. The video data may include a live stream of video footage captured by the camera and/or one or more recordings of video footage captured by the camera. In some embodiments, the video data may include any of the video clips, video feed, images, or other types of visual data provided to the video analysis system 408 of FIG. 4 from the cameras 402, the image sources 404, and/or the user devices 406.

Process 500 is shown to include retrieving contextual information associated with the camera (step 504). In some embodiments, the contextual information may include a remaining amount of storage for video data recorded by the camera. In some embodiments, the storage space may be local to the building security system (e.g., stored by the surveillance system 210) and/or remote to the security system (e.g., stored by the cloud server 216). As another example, the contextual information may include a particular domain/enterprise in which the camera is installed (e.g., a school, a shopping center, an airport, a corporate center, etc.).

In some embodiments, process 500 may include generating an alert based upon the contextual information (step 506). For example, the alert may be generated in response to the retrieved contextual information indicating that the remaining amount of storage for video data recorded by the camera is limited (e.g., less than 1% of a total storage space, less than 5% of total storage space, less than 10% of a total storage space, etc.). In some embodiments, a user/operator of the building security system may designate a preference for the alert to be automatically generated when the remaining amount of storage reaches a predefined amount (e.g., the less than 1% of the total storage space, the less than 5% of the total storage space, the less than 10% of the total storage space, etc.). The alert may be transmitted to user devices 226, as described above with reference to FIG. 2, and may include an option to update an amount of compression applied to the video data. In some embodiments, the alert may include a recommended amount of compression to apply to the video data based on the remaining amount of storage and/or objects of interest included in the video data. For example, as described below, the recommendation included in the alert may suggest applying a high amount of compression to video data that do not include an object of interest in order to maximize the remaining amount of storage for new video data and/or existing video data that include an object of interest.

Process 500 is shown to include analyzing one or more frames within the video data using one or more artificial intelligence (AI) models (step 508). Analyzing the one or more frames within the video data may further include detecting an object of interest (Step 509). In some embodiments, the object of interest may be detected based on the classifications 430 of the video data determined by the video analysis system 408, as described above with reference to FIG. 4. For example, each of the one or more frames may correspond to video data in at least one of the classifications 430 of video data including an object of interest or video data not including an object of interest.

In some embodiments, process 500 may include training the one or more AI models (step 510). The one or more AI models may be trained using the video analysis system 408 (e.g., the dataset manager 418, the training dataset 420, the model trainer 422, etc.) of FIG. 4. In some embodiments, the one or more AI models may be trained using domain-specific training data (e.g., the enterprise-specific example of the training dataset 420, as described above with reference to FIG. 4). In some embodiments, at least one of the one or more AI models may include a generative AI model, and the model may be trained using information/data received from the implementation of the model during process 500.

Process 500 is shown to include determining camera settings (e.g., a camera codec setting) from among a plurality of settings using one or more AI models (step 512). In some embodiments, the camera settings may be determined based upon the contextual information retrieved at step 504. For example, the camera settings may be determined based upon the remaining amount of storage associated with the camera. That is, the camera settings may be determined such that the remaining amount of storage is optimized, as described below with reference to FIG. 6. Optimizing the remaining amount of storage may include, for instance, applying a camera setting with a higher compression amount to video data where no object of interest is detected such that the less relevant video data (e.g., video data including no object of interest) occupies a minimal amount of the remaining amount of storage.

In some embodiments, the AI model used to determine the camera settings may determine the camera settings based upon the domain-specific training data. In such embodiments, the AI model may be trained to identify video data with relevance to the particular domain in which the building security system is being implemented. For example, if the building security system is implemented in a corporate center, the objects of interest in that domain may differ from the objects of interest when the building security system is implemented in a shopping mall. In this example, the AI model may apply a higher compression amount to the video data with the objects of interest that are of a lower interest to the particular domain. For instance, in the shopping mall, a stroller may be of a lower interest to that particular domain than in a corporate center. Therefore, the AI model may be trained to apply a lower compression amount to the video data from a camera in the shopping than a compression amount applied to video data depicting a stroller from a camera in a corporate center. Additionally or alternatively, the AI model may be configured to apply different amounts of compression to different parts of a same frame depending upon an object of interest detected in the frame. For example, if the frame depicts a scene with a single person, the amount of compression may be reduced (e.g., low compression rate) around the single person (e.g., the object of interest), while a higher compression rate is applied to the remainder of the frame (e.g., to a background, a surrounding environment, etc.).

Step 512 is further shown to include determining a first setting from among the plurality of settings for the camera for a first time (step 512a) and determining a second setting from among the plurality of settings for the camera for a second time (step 512b). That is, each of the one or more frames analyzed at step 508 may correspond to a time within the video data. Therefore, each time within the video data may correspond to a distinct amount of compression depending on whether an object of interest is detected in the one or more frames. In some embodiments, the one or more AI models may be configured to automatically update the camera settings for each of the one or more frames included in received video data to apply a compression amount based upon the detection of an object of interest.

### Video Storage Management

Referring now to FIG. 6, a flowchart of a process 600 for managing video storage of camera footage (e.g., video data) in a building security system is shown, according to an exemplary embodiment. In some embodiments, the process 600 may be performed by the video analysis system 408 of FIG. 4. The models used in process 600 are machine learning models, and at least one of the models may be the same as or similar to the model 424 shown in FIG. 4. Further, at least one of the models used in process 600 may be the same as or similar to at least one of the models used in process 500. The process 600 may be performed by one or more processors, such as the processor 414.

Process 600 is shown to include receiving video data from one or more cameras (step 602). In some embodiments, the one or more cameras may include camera 102 of the building security system depicted in FIG. 1. That is, the method may include receiving, by one or more processors, from one or more cameras communicably coupled to a building security system, video data, where the video data includes one or more video recordings. The video data refers to one or more recordings of video footage captured by the camera. In some embodiments, the video data may include any of the video clips, video feed, images, or other types of visual data provided to the video analysis system 408 of FIG. 4 from the cameras 402, the image sources 404, and/or the user devices 406.

Process 600 is shown to include retrieving contextual information associated with the video data (step 604). In some embodiments, the contextual information retrieved at step 604 includes the contextual information retrieved at step 504 of process 500, as described above. As such, the method may include retrieving, by the one or more processors, contextual information associated with the video data. For instance, the contextual information may include the remaining amount of storage for video data recorded by the camera. As another example, the contextual information may include the particular domain/enterprise in which the camera is installed (e.g., a school, a shopping center, an airport, a corporate center, etc.). In this example, the contextual information may further include periods of activity and/or periods of inactivity associated with the particular domain/enterprise. For instance, if the contextual information reveals that the camera is installed in a school, the contextual information may further indicate a period of activity as 6:00AM - 10:00PM, and a period of inactivity as 10:00PM-6:00AM. As still another example, the contextual information associated with the video data may include a time at which the video data was recorded by the camera. In this way, the contextual information may reveal whether the video data was recorded during a period of activity or during a period of inactivity.

In some embodiments, process 600 may include generating an alert based upon the contextual information (step 606). The alert generated at step 606 may be a same alert as the alert generated at step 506 of process 500, or the alert generated at step 606 may be a distinct alert. For example, as described above with reference to process 500, the alert may be generated in response to the retrieved contextual information indicating that the remaining amount of storage for video data recorded by the camera is limited. As another example, the contextual information associated with the video data includes an amount of remaining storage associated with the building security system for storage of the video data, the method further includes generating, by the one or more processors, an alert based on the amount of remaining storage reaching a threshold amount, where the alert includes an option to implement the action to delete or reduce the storage size of the at least one of the one or more video recordings.

In some embodiments, a user/operator of the building security system may designate a preference for the alert to be automatically generated when the remaining amount of storage reaches a threshold amount (e.g., the less than 1% of the total storage space, the less than 5% of the total storage space, the less than 10% of the total storage space, etc.). The alert may be transmitted to user devices 226, as described above with reference to FIG. 2, and may include an option to manage video storage based on the contextual information. In some embodiments, the alert may include a recommended action to implement based on the remaining amount of storage and/or the objects of interest included in the video data. For example, as described below, the recommended action included in the alert may suggest applying a high amount of compression to video data that do not include an object of interest, deleting the video data that do not include an object of interest, and/or reducing a bitrate applied to the video data that do not include an object of interest in order to maximize the remaining amount of storage for new video data and/or existing video data that include an object of interest.

Process 600 is shown to include analyzing the video data using one or more artificial intelligence (AI) models (step 608). Analyzing the video data at step 608 may be a similar or identical operation as analyzing the one or more frames within the video data at step 508 of process 500, and the one or more AI models used at step 608 may be a same model as the one or more AI models used at step 508. That is, analyzing the one or more frames within the video data may include detecting one or more details (609). For example, the method may include analyzing, by the one or more processors, using one or more artificial intelligence (AI) models, the video data, where the analysis of the video data includes detecting one or more details. The one or more details refer to objects of interest detected in the video data, as described above. In some embodiments, the objects of interest may be detected based on the classifications 430 of the video data determined by the video analysis system 408, as described above with reference to FIG. 4.

In some embodiments, process 600 may include training the one or more AI models (step 610). The one or more AI models may be trained using the video analysis system 408 (e.g., the dataset manager 418, the training dataset 420, the model trainer 422, etc.) of FIG. 4. In some embodiments, at least one of the one or more AI models may be trained using domain-specific data, where the domain-specific data relates to a domain in which the building security system is being implemented (e.g., the enterprise-specific example of the training dataset 420, as described above with reference to FIG. 4). In some embodiments, at least one of the one or more AI models may include a generative AI model, and the model may be trained using information/data received from the implementation of the model during process 600.

Process 600 is shown to include determining a relevance of the video data using the one or more AI models (step 612). In some embodiments, an AI model used at step 612 may be the same as an AI model used at step 608. Alternatively, the AI model used at step 612 may be different from the AI model used to perform step 608. The relevance of the video data may be determined based on the analysis of the video data performed at step 608 and on the contextual information retrieved at step 604. As such, in some embodiments, the method includes determining, by the one or more processors, using the one or more AI models, based on the contextual information and on the one or more details detected within the video data, a relevance of the one or more video recordings.

In some embodiments, the one or more AI models determine a first relevance of a first video recording and a second relevance of a second video recording, where the first relevance is greater than the second relevance, where a compression amount applied to the first video recording is smaller than a compression amount applied to the second video recording, and the second video recording occupies a smaller amount of storage space than the first video recording.

For example, if the one or more AI models used to perform step 608, as described above, detects an object of interest from video data recorded at 10:54AM (e.g., as indicated by the contextual information) and detects an object of interest from video data recorded at 3:45AM, the video data recorded at 3:45AM may have a higher relevance than the video data recorded at 10:54AM. In other words, the relevance may refer to a likelihood of the video data depicting an anomaly or other security threat given the analysis performed at step 608 and the contextual information retrieved at step 604. The video data having a higher likelihood of depicting an anomaly/security threat (e.g., the video data recorded at 3:45AM) may have a higher relevance than the video data with a lower likelihood of depicting an anomaly/security threat (e.g., the video data recorded at 10:45AM). Continuing with this example, if the one or more AI models detect, at step 608, that video data recorded at 3:45AM does not include an object of interest, the one or more AI models may determine, at step 612, a lower relevance of such video data than the video data including an object of interest from 3:45AM and 10:45AM.

In some embodiments, the AI model used to determine the relevance of the video data may determine the relevance based upon the domain-specific training data. For example, if the building security system is implemented in a corporate center, the objects of interest in that domain may differ from the objects of interest when the building security system is implemented in a shopping mall. In this example, the AI model may determine a higher relevance of the video data depicting the objects of interest that are of a lower interest to the particular domain. For instance, in the shopping mall, a stroller may be of a lower interest to that particular domain than in a corporate center. Therefore, the AI model may be trained to determine a higher relevance of video data depicting a stroller from a camera in the corporate center than video data depicting a stroller from a camera in a shopping mall.

Based on the relevance determined at step 612, process 600 includes automatically implementing an action to delete or reduce a storage size of the video data (step 614). In some embodiments, the action may be automatically implemented at step 614 based upon the contextual information retrieved at step 604. As such, the method may include, based on the relevance of the one or more video recordings, automatically implementing, by the one or more processors, using the one or more AI models, an action to delete or reduce a storage size of at least one of the one or more video recordings. In some embodiments, the action to delete or reduce the storage size of the at least one of the one or more video recordings includes updating a compression amount applied to the at least one of the one or more video recordings. In some embodiments, the action to delete or reduce the storage size of the at least one of the one or more video recordings includes deleting the at least one of the one or more video recordings.

In some embodiments, the action to delete or reduce the storage size of the at least one of the one or more video recordings includes adjusting a bitrate applied to the at least one of the one or more video recordings, and the one or more AI models determine a first relevance of a first video recording and a second relevance of a second video recording, where the first relevance is greater than the second relevance, a bitrate applied to the first video recording is higher than a bitrate applied to the second video recording, and the second video recording occupies a smaller amount of storage space than the first video recording.

For example, the action may be implemented based upon the remaining amount of storage for video data. That is, the action may be implemented to optimize the remaining amount of storage, as described above with reference to step 512 of process 500. The remaining amount of storage may be optimized by updating a compression amount applied to video data (step 614a) (e.g., as determined during process 500), deleting video data (step 614b), and/or adjusting a bitrate applied to the video data (step 614c). For example, if the remaining amount of storage for video data is running out, video data with a lowest determined relevance (e.g., as determined at step 612), may be deleted at step 614b. Similarly, the bitrate applied to the video data with the lowest determined relevance may be reduced at step 614c such that less relevant video data occupies a smaller amount of storage space than more relevant video data.

Further embodiments of the present invention may be summarized as follows. Any of these embodiments can be claimed in a separate claim, e.g. by substituting the word "Embodiment" by "Claim", in particular in the order as mentioned below and/or in any combination with any embodiment described above or with any of the features of the attached claims:
Embodiment 1. A building security system comprising:
   one or more computer-readable storage media having instructions stored thereon that, when executed by one or more processors, cause the one or more processors to:
   receive, from one or more cameras communicably coupled to the building security system, video data, wherein the video data comprises one or more video recordings;
   retrieve contextual information associated with the video data;
   analyze, using one or more artificial intelligence (AI) models, the video data, wherein the analysis of the video data comprises detecting one or more details;
   determine, using the one or more AI models, based on the contextual information and on the one or more details detected within the video data, a relevance of the one or more video recordings; and
   based on the relevance of the one or more video recordings, automatically implement, using the one or more AI models, an action to delete or reduce a storage size of at least one of the one or more video recordings.
Embodiment 2. The building security system of embodiment 1, wherein the action to delete or reduce the storage size of the at least one of the one or more video recordings comprises updating a compression amount applied to the at least one of the one or more video recordings.
Embodiment 3. The building security system of embodiment 2, wherein the one or more AI models determine a first relevance of a first video recording and a second relevance of a second video recording, wherein the first relevance is greater than the second relevance, and wherein a compression amount applied to the first video recording is smaller than a compression amount applied to the second video recording.
Embodiment 4. The building security system of embodiment 3, wherein the second video recording occupies a smaller amount of storage space than the first video recording.
Embodiment 5. The building security system of any of embodiments 1 to 4, wherein the action to delete or reduce the storage size of the at least one of the one or more video recordings comprises deleting the at least one of the one or more video recordings.
Embodiment 6. The building security system of any of embodiments 1 to 5, wherein the action to delete or reduce the storage size of the at least one of the one or more video recordings comprises adjusting a bitrate applied to the at least one of the one or more video recordings.
Embodiment 7. The building security system of embodiment 6, wherein the one or more AI models determine a first relevance of a first video recording and a second relevance of a second video recording, wherein the first relevance is greater than the second relevance, and wherein a bitrate applied to the first video recording is higher than a bitrate applied to the second video recording.
Embodiment 8. The building security system of embodiment 7, wherein the second video recording occupies a smaller amount of storage space than the first video recording.
Embodiment 9. The building security system of any of embodiments 1 to 8, wherein the contextual information associated with the video data includes an amount of remaining storage associated with the building security system for storage of the video data.
Embodiment 10. The building security system of embodiment 9, wherein the instructions further cause the one or more processors to generate an alert based on the amount of remaining storage reaching a threshold amount.
Embodiment 11. The building security system of embodiment 10, wherein the alert comprises an option to implement the action to delete or reduce the storage size of the at least one of the one or more video recordings.
Embodiment 12. The building security system of any of embodiments 1 to 11, wherein at least one of the one or more AI models is trained using domain-specific data, wherein the domain-specific data relates to a domain in which the building security system is being implemented.
Embodiment 13. A method comprising:
   receiving, by one or more processors, from one or more cameras communicably coupled to a building security system, video data, wherein the video data comprises one or more video recordings;
   retrieving, by the one or more processors, contextual information associated with the video data;
   analyzing, by the one or more processors, using one or more artificial intelligence (AI) models, the video data, wherein the analysis of the video data comprises detecting one or more details;
   determining, by the one or more processors, using the one or more AI models, based on the contextual information and on the one or more details detected within the video data, a relevance of the one or more video recordings; and
   based on the relevance of the one or more video recordings, automatically implementing, by the one or more processors, using the one or more AI models, an action to delete or reduce a storage size of at least one of the one or more video recordings.
Embodiment 14. The method of embodiment 13, wherein the action to delete or reduce the storage size of the at least one of the one or more video recordings comprises updating a compression amount applied to the at least one of the one or more video recordings.
Embodiment 15. The method of embodiment 13 or 14, wherein the one or more AI models determine a first relevance of a first video recording and a second relevance of a second video recording, wherein the first relevance is greater than the second relevance, wherein a compression amount applied to the first video recording is smaller than a compression amount applied to the second video recording, and wherein the second video recording occupies a smaller amount of storage space than the first video recording.
Embodiment 16. The method of any of embodiments 13 to 15, wherein the action to delete or reduce the storage size of the at least one of the one or more video recordings comprises deleting the at least one of the one or more video recordings.
Embodiment 17. The method of any of embodiments 13 to 16, wherein:
   the action to delete or reduce the storage size of the at least one of the one or more video recordings comprises adjusting a bitrate applied to the at least one of the one or more video recordings,
   the one or more AI models determine a first relevance of a first video recording and a second relevance of a second video recording,
   the first relevance is greater than the second relevance,
   a bitrate applied to the first video recording is higher than a bitrate applied to the second video recording, and
   the second video recording occupies a smaller amount of storage space than the first video recording.
Embodiment 18. The method of any of embodiments 13 to 17, wherein the contextual information associated with the video data includes an amount of remaining storage associated with the building security system for storage of the video data, wherein the method further comprises:
   generating, by the one or more processors, an alert based on the amount of remaining storage reaching a threshold amount, wherein the alert comprises an option to implement the action to delete or reduce the storage size of the at least one of the one or more video recordings.
Embodiment 19. The method of any of embodiments 13 to 18, wherein at least one of the one or more AI models is trained using domain-specific data, wherein the domain-specific data relates to a domain in which the building security system is being implemented.
Embodiment 20. One or more non-transitory computer-readable media storing instructions thereon that, when executed by one or more processors, cause the one or more processors to perform a method according to or within any of the above mentioned embodiments, in particular operations comprising:
   receiving, from one or more cameras communicably coupled to a building security system, video data, wherein the video data comprises one or more video recordings;
   retrieving contextual information associated with the video data;
   analyzing, using one or more artificial intelligence (AI) models, the video data, wherein the analysis of the video data comprises detecting one or more details;
   determining, using the one or more AI models, based on the contextual information and on the one or more details detected within the video data, a relevance of the one or more video recordings; and
   based on the relevance of the one or more video recordings, automatically implementing, using the one or more AI models, an action to delete or reduce a storage size of at least one of the one or more video recordings.

In an embodiment, one or more non-transitory computer-readable storage media may store instructions that, when executed by one or more processors, cause the one or more processors to perform a method according to or within any of the above mentioned embodiments.

In an embodiment, a system may comprise: one or more processors; and at least one memory coupled to the processors and comprising instructions executable by the processors, the processors operable when executing the instructions to perform a method according to or within any of the above mentioned embodiments.

In an embodiment, a computer program product, preferably comprising a computer-readable non-transitory storage media, may be operable when executed on a data processing system to perform a method according to or within any of the above mentioned embodiments.

The construction and arrangement of the systems and methods as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.). For example, the position of elements can be reversed or otherwise varied and the nature or number of discrete elements or positions can be altered or varied. Accordingly, all such modifications are intended to be included within the scope of the present disclosure. The order or sequence of any process or method steps can be varied or re-sequenced according to alternative embodiments. Other substitutions, modifications, changes, and omissions can be made in the design, operating conditions and arrangement of the exemplary embodiments without departing from the scope of the present disclosure.

The present disclosure contemplates methods, systems and program products on any machine-readable media for accomplishing various operations. The embodiments of the present disclosure can be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. Combinations of the above are also included within the scope of machine-readable media. Machine-executable instructions include, for example, instructions and data which cause a general-purpose computer, special purpose computer, or special purpose processing machines to perform a certain function or group of functions.

Although the figures show a specific order of method steps, the order of the steps may differ from what is depicted. Also, two or more steps can be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps.

## Claims

1. A building security system comprising:
one or more computer-readable storage media having instructions stored thereon that, when executed by one or more processors, cause the one or more processors to:
receive, from one or more cameras communicably coupled to the building security system, video data, wherein the video data comprises one or more video recordings;
retrieve contextual information associated with the video data;
analyze, using one or more artificial intelligence (AI) models, the video data,
wherein the analysis of the video data comprises detecting one or more details;
determine, using the one or more AI models, based on the contextual information and on the one or more details detected within the video data, a relevance of the one or more video recordings; and
based on the relevance of the one or more video recordings, automatically implement, using the one or more AI models, an action to delete or reduce a storage size of at least one of the one or more video recordings.

2. The building security system of claim 1, wherein the action to delete or reduce the storage size of the at least one of the one or more video recordings comprises updating a compression amount applied to the at least one of the one or more video recordings.

3. The building security system of claim 2, wherein the one or more AI models determine a first relevance of a first video recording and a second relevance of a second video recording, wherein the first relevance is greater than the second relevance, and wherein a compression amount applied to the first video recording is smaller than a compression amount applied to the second video recording.

4. The building security system of claim 3, wherein the second video recording occupies a smaller amount of storage space than the first video recording.

5. The building security system of any of claims 1 to 4, wherein the action to delete or reduce the storage size of the at least one of the one or more video recordings comprises deleting the at least one of the one or more video recordings.

6. The building security system of any of claims 1 to 5, wherein the action to delete or reduce the storage size of the at least one of the one or more video recordings comprises adjusting a bitrate applied to the at least one of the one or more video recordings;
optionally, wherein the one or more AI models determine a first relevance of a first video recording and a second relevance of a second video recording, wherein the first relevance is greater than the second relevance, and wherein a bitrate applied to the first video recording is higher than a bitrate applied to the second video recording;
optionally, wherein the second video recording occupies a smaller amount of storage space than the first video recording.

7. The building security system of any of claims 1 to 6, wherein the contextual information associated with the video data includes an amount of remaining storage associated with the building security system for storage of the video data;
optionally, wherein the instructions further cause the one or more processors to generate an alert based on the amount of remaining storage reaching a threshold amount;
optionally, wherein the alert comprises an option to implement the action to delete or reduce the storage size of the at least one of the one or more video recordings.

8. The building security system of any of claims 1 to 7, wherein at least one of the one or more AI models is trained using domain-specific data, wherein the domain-specific data relates to a domain in which the building security system is being implemented.

9. A method comprising:
receiving, by one or more processors, from one or more cameras communicably coupled to a building security system, video data, wherein the video data comprises one or more video recordings;
retrieving, by the one or more processors, contextual information associated with the video data;
analyzing, by the one or more processors, using one or more artificial intelligence (AI) models, the video data, wherein the analysis of the video data comprises detecting one or more details;
determining, by the one or more processors, using the one or more AI models, based on the contextual information and on the one or more details detected within the video data, a relevance of the one or more video recordings; and
based on the relevance of the one or more video recordings, automatically implementing, by the one or more processors, using the one or more AI models, an action to delete or reduce a storage size of at least one of the one or more video recordings.

10. The method of claim 9, wherein the action to delete or reduce the storage size of the at least one of the one or more video recordings comprises updating a compression amount applied to the at least one of the one or more video recordings.

11. The method of claim 9 or 10, wherein the one or more AI models determine a first relevance of a first video recording and a second relevance of a second video recording, wherein the first relevance is greater than the second relevance, wherein a compression amount applied to the first video recording is smaller than a compression amount applied to the second video recording, and wherein the second video recording occupies a smaller amount of storage space than the first video recording.

12. The method of any of claims 9 to 11, wherein the action to delete or reduce the storage size of the at least one of the one or more video recordings comprises deleting the at least one of the one or more video recordings.

13. The method of any of claims 9 to 12, wherein:
the action to delete or reduce the storage size of the at least one of the one or more video recordings comprises adjusting a bitrate applied to the at least one of the one or more video recordings,
the one or more AI models determine a first relevance of a first video recording and a second relevance of a second video recording,
the first relevance is greater than the second relevance,
a bitrate applied to the first video recording is higher than a bitrate applied to the second video recording, and
the second video recording occupies a smaller amount of storage space than the first video recording.

14. The method of any of claims 9 to 13, wherein the contextual information associated with the video data includes an amount of remaining storage associated with the building security system for storage of the video data, wherein the method further comprises:
generating, by the one or more processors, an alert based on the amount of remaining storage reaching a threshold amount, wherein the alert comprises an option to implement the action to delete or reduce the storage size of the at least one of the one or more video recordings; and/or
wherein at least one of the one or more AI models is trained using domain-specific data, wherein the domain-specific data relates to a domain in which the building security system is being implemented.

15. One or more non-transitory computer-readable media storing instructions thereon that, when executed by one or more processors, cause the one or more processors
(i) to perform a method according to any of claims 9 to 14
or
(ii) to perform operations comprising:
receiving, from one or more cameras communicably coupled to a building security system, video data, wherein the video data comprises one or more video recordings;
retrieving contextual information associated with the video data;
analyzing, using one or more artificial intelligence (AI) models, the video data, wherein the analysis of the video data comprises detecting one or more details;
determining, using the one or more AI models, based on the contextual information and on the one or more details detected within the video data, a relevance of the one or more video recordings; and
based on the relevance of the one or more video recordings, automatically implementing, using the one or more AI models, an action to delete or reduce a storage size of at least one of the one or more video recordings.
